# EUROPEAN PATENT APPLICATION

(11) **EP 2 375 342 A2**
(43) Date of publication of application: **12.10.2011**
(21) Application number: 10190039.7
(22) Date of filing: 04.11.2010
(51) Int. Cl.: G06F 17/24, G06F 3/048

(54) **Method for providing function of writing text and function of clipping and electronic apparatus applying the same**

(30) Priority: 07.12.2009 KR 20090120518
(71) Applicant: SAMSUNG ELECTRONICS CO., LTD., Suwon-si, Gyeonggi-do (KR)
(72) Inventor: Park Eun-hee, Gyeonggi-do (KR); Kwon O-jae, Seoul (KR); Kim, Yoo-tai, Gyeonggi-do (KR); Cho, Bong-hyun, Gyeonggi-do (KR); Yang, Gyung-hye, Seoul (KR); Yoon, Soo-yeoun, Seoul (KR)
(74) Representative: Bruce, Alexander Richard Henry

(57) **Abstract**

A method for providing a text writing function and a clipping function and an electronic apparatus applying the same are provided. If a command is input while content is being displayed, a text writing screen including information related to the content is displayed. Accordingly, since the content-related information is automatically displayed when the user writes text relating to the content, the user is not required to input the content-related information separately.

## Description

The present invention relates to a method for providing a function of writing text and a function of clipping and an electronic apparatus applying the same, and more particularly, to a method for providing a function of writing text relating to currently displayed content and a function of clipping, and an electronic apparatus applying the same.

In recent years, multimedia apparatuses which provide many different types of contents have been progressed. In particular, an electronic book apparatus using an electronic paper display (EPD) in order to provide book content to a user is coming into the market.

The electronic book content, also known as an e-book or a digital book, records information such as text or image on an electronic multimedia device and can be used as a printed book. The electronic book content is convenient to readers in that it is cheaper compared to a printed book and enables the readers to more easily access and purchase books. The electronic book content is also attractive to publishing companies due to the low cost for publishing and distributing books and easy updatability.

The electronic book apparatus generally means an apparatus which displays electronic book contents on a screen. Readers can easily download the electronic book contents using the electronic book apparatus and can use a number of different functions of the electronic book.

While using such an electronic book apparatus, the user may wish to write a book report relating to the book he/she is reading or to clip some part from the book. Therefore, there is a demand for a method for allowing a user to easily write a book report relating to the book he/she is reading or to clip some part from the book. Exemplary embodiments overcome the above disadvantages and other disadvantages not described above. Also, the exemplary embodiments are not required to overcome the disadvantages described above, and may not overcome any of the problems described above.

An aspect of an exemplary embodiment provides a method for providing a function of writing text and an electronic apparatus applying the same. According to the exemplary embodiment of the method for providing a function of writing text, if a command is input while content is being displayed, a text writing screen including information relating to the content is displayed.

An aspect of another exemplary embodiment provides a method for providing a clipping function and an electronic apparatus applying the same. According to the exemplary embodiment of the method for providing a clipping function, if a command to select an area from content is input while the content is being displayed, the area is extracted; information related to the content is appended to the selected area of the content and the area is displayed.

According to an aspect of an exemplary embodiment, a method for providing a text writing function includes: displaying content, and if a command is input while the content is being displayed, displaying a text writing screen to write text relating to the content, and the text writing screen includes information relating to the content.

The method may further include: extracting the information related to the content from a file associated with the content, and appending the information related to the content to the text writing screen.

The extracting may extract the information related to the content from metadata of the file associated with the content.

If the content includes book content, the information related to the content may include at least one of a title, an author, a publishing company, and a publishing date of the book content.

The text writing screen may include a screen to write a report relating to the content.

The method may further include: extracting category information of the content, and selecting a text writing form corresponding to the category information of the content, and the displaying the text writing screen may display a text writing screen of the selected text writing form.

According to an aspect of another exemplary embodiment, an electronic apparatus includes: a display unit which displays content, a manipulation unit which receives a command from a user, and a controller which displays a text writing screen to write text if a command is input through the manipulation unit while the content is being displayed, and the text writing screen includes information relating to the content.

The controller may extract the information related to the content from a file associated with the content and may append the information related to the content to the text writing screen.

The controller may extract the information related to the content from metadata of the file associated with the content.

If the content includes book content, the content-related information may include at least one of a title, an author, a publishing company, and a publishing date of the book content.

The text writing screen may include a screen to write a report relating to the content.

The controller may extract category information of the content, select a text writing form corresponding to the category information of the content, and display the text writing screen based on the selected form.

According to an aspect of another exemplary embodiment, a method for providing a clipping function includes: displaying content, if a command to select a area from the content is input while the content is being displayed, extracting the selected area from the content, appending information relating to the content to the extracted area of the content, and displaying the extracted area of the content and the information related to the content on a screen.

The method may further include extracting the information related to the content from a file associated with the content, and the appending may append the extracted information related to the content to the extracted area of the content.

The extracting the content-related information may extract the information related to the content from metadata of the file associated with the content.

If the content includes book content, the content-related information may include at least one of a title, an author, a publishing company, and a publishing date of the book content.

According to an aspect of another exemplary embodiment, an electronic apparatus includes: a display unit which displays content, a manipulation unit which receives a command from a user, and a controller which, if a command to select an area from the content is input through the manipulation unit while the content is being displayed, extracts the selected area from the content, appends information relating to the content to the extracted area of the content, and displays the extracted area of the content and the information related to the content on a screen of the display unit.

The controller may extract the information related to the content from a file associated with the content and append the extracted information related to the content to the extracted area of the content.

The controller may extract the information related to the content from metadata of the file associated with the content.

If the content includes book content, the information related to the content may include at least one of a title, an author, a publishing company, and a publishing date of the book content. According to an aspect of another exemplary embodiment, there is provided a method of providing a text processing function, the method including: displaying content; determining whether a command is input; simultaneously displaying an area to write text and information relating to the content if the command is a text writing command and if the command is input while the content is being displayed; and extracting an area from the content and simultaneously displaying the extracted area and the information related to the content if the command is to select the area and if the command is input while the content is being displayed.

The method may also include appending the information relating to the content to the extracted area of the content.

The content may include a text of a book, and the content-related information may include at least one of a title, an author, a publishing company, and a publishing date of the book.

Additional aspects and advantages will be set forth in the detailed description, will be obvious from the detailed description, or may be learned by practicing the exemplary embodiments.

The above and/or other aspects will be more apparent by describing in detail exemplary embodiments thereof, with reference to the accompanying drawings in which:
FIG. 1 is a view illustrating a screen of an electronic book apparatus according to an exemplary embodiment;
FIG. 2 is a flowchart illustrating a method for providing a function of writing text according to an exemplary embodiment;
FIGS. 3A to 3C are views illustrating a process of executing a book report writing function according to an exemplary embodiment;
FIG. 4 is a view illustrating forms of exemplary book reports associated with respective categories of contents;
FIG. 5 is a flowchart illustrating a method for providing a clipping function according to an exemplary embodiment;
FIGS. 6A to 6C are views illustrating a process of executing a clipping function according to an exemplary embodiment; and
FIG. 7 is a block diagram illustrating an electronic book apparatus according to an exemplary embodiment.

Hereinafter, the exemplary embodiments will be described in greater detail with reference to the accompanying drawings.

In the following description, same reference numerals are used for the same elements when they are depicted in different drawings. The matters defined in the description, such as detailed construction and elements, are provided to assist in a comprehensive understanding of the inventive concept. Thus, it is apparent that the exemplary embodiments can be carried out without those specifically defined matters. Also, functions or elements known in the related art are not described in detail since they would obscure the exemplary embodiments with unnecessary detail. Expression such as "at least one of," when preceding a list of elements, modify the entire list and not the individual elements of the list.

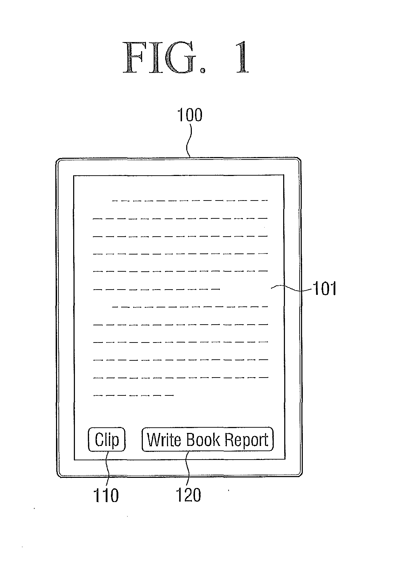

FIG. 1 is a view illustrating a screen 101 of an electronic book apparatus 100 according to an exemplary embodiment. As shown in FIG. 1, the electronic book apparatus 100 displays contents on the screen 101. Also, the electronic book apparatus 100 may display an icon to receive a command from a user on the screen 101. For example, as shown in FIG. 1, the electronic book apparatus 100 may display a clipping command icon 110 and a book report writing command icon 120 on the screen.

The electronic book apparatus 100 supports a touch screen function as a user manipulation interface. Therefore, a user can input a command by touching a desired command icon.

The clipping command icon 110 is an icon to receive a clipping command. If a clipping command is input, the electronic book apparatus 100 executes a clipping function. The clipping function allows a user to select a specific area from content which is being currently displayed on the screen 101 and clip it. If the user selects a specific area from content using the clipping function, the electronic book apparatus 100 displays the clipped specific area of the content on the screen 101 and displays content-related information along with the specific area.

The book report writing command icon 120 is an icon to receive a command to write a book report. If a command to write a book report is input, the electronic book apparatus 100 executes a function of writing a book report relating to content which is being currently displayed on the screen. The function of writing a book report allows a user to write a book report relating to content currently displayed on the screen. If the user inputs a command to write a book report, the electronic book apparatus 100 displays a book report writing screen. The electronic book apparatus 100 displays content-related information on the book report writing screen even without receiving a command to do so from the user.

The content-related information is information relating to the content which is being currently displayed on the electronic book apparatus 100. For example, if the content is electronic book content, the content-related information may include at least one of a title, an author, a publishing company, and a publishing date.

As described above, the user can write a book report relating to the book he/she is reading or clip some content from the book using the electronic book apparatus 100. In particular, since the content-related information is displayed when the book report writing screen or the clipped specific area is displayed, the user is not required to input the content-related information separately.

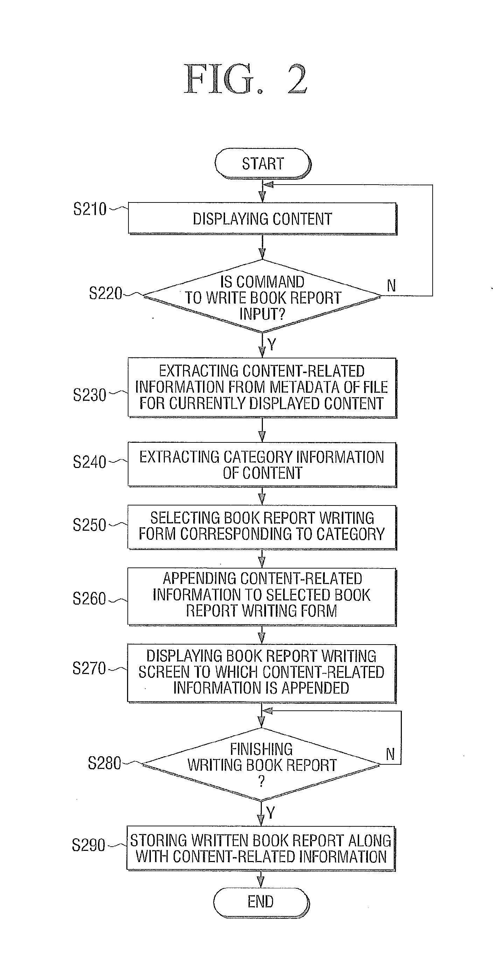

Hereinafter, a method for providing a function of writing text (that is, a function of writing a book report) of the electronic book apparatus 100 will be described in detail with reference to FIGS. 2 to 4. FIG. 2 is a flowchart illustrating a method for providing a function of writing text according to an exemplary embodiment.

The electronic book apparatus 100 display content on the screen 101 (S210). In this exemplary embodiment, the content is electronic book content. However, this should not be considered as limiting. Any content that can be displayed on the screen of the electronic book apparatus 100 such as a picture and a moving picture, i.e., a video, can be applied.

The electronic book apparatus 100 determines whether or not a command to write a book report is input by a user's manipulation, for example, by determining whether the book report writing command icon 120 is touched or not.

If a command to write a book report is input (S220-Y), the electronic book apparatus 100 extracts content-related information from metadata of a file associated with, or which stores, the currently displayed content (S230). The metadata is data for explaining content and is structured according a specific standard. The metadata is also called attribute information. The metadata is given to the content according to an industry standard so that it is easy to find desired content from massive contents and use it. The metadata records the location and other details of the content, information regarding a writer, an authority condition, a condition of use, and a use history, for example. Also, the metadata of electronic book content includes at least one of a title, an author, a publishing company, a publishing date, and category information, for example. The metadata of the content is recorded on a content file along with content data.

The electronic book apparatus 100 extracts category information from the metadata (S240). The electronic book apparatus 100 selects a book report writing form corresponding to the category information of the content (S250).

The book report writing form refers to a format or a template which is provided on a book report writing screen in order for a user to write a book report. The book report writing form differs depending on which category the content belongs to. For example, the electronic book apparatus 100 displays a different book report writing form depending on which category, for example among health, novel, science and cooking, the current content belongs to. The electronic book apparatus 100 stores book report writing forms for respective categories of contents so that the user can select a book report writing form corresponding to the category information of the current content. The book report writing forms for the respective categories may be pre-stored in the electronic book apparatus 100 or may be created by the user.

Since the electronic book apparatus 100 displays a book report writing screen of a suitable form according to the category of the content, the user can write a book report relating to the content more easily.

Next, the electronic book apparatus 100 appends, i.e., attaches or joins, the content-related information to the book report writing screen of the selected form (S260). Then, the electronic book apparatus 100 displays the book report writing screen to which the content-related information is appended (S270). At this time, the electronic book apparatus 100 displays the book report writing screen with the selected book report writing form.

Then, the user is able to write a book report using a text input interface of the electronic book apparatus 100. The electronic book apparatus 100 determines whether a command to finish writing a book report is input or not (S280).

If a command to finish writing a book report is input (S280-Y), the electronic book apparatus 100 stores the written book report along with the content-related information (S290). Accordingly, the electronic book apparatus 100 displays the content-related information when loading the written book report again and displaying it on the screen.

Through the above-described exemplary process, the electronic book apparatus 100 displays the book report writing screen such that the user writes a book report relating to the currently displayed content. Since the content-related information is also displayed on the book report writing screen, the user can easily know what content corresponds to the book report he/she is writing. Also, since a suitable book report writing form is selected according to the category of the content, the user can write a book report using a suitable form for the category of the content.

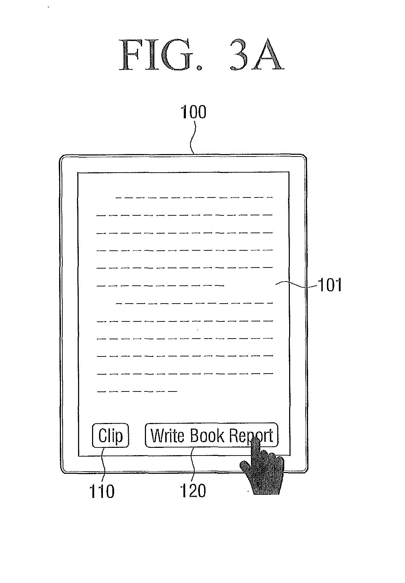

Hereinafter, a process of writing a book report will be described with reference to FIGS. 3A to 4. FIGS. 3A to 3C are views illustrating a process of executing a book report writing function according to an exemplary embodiment.

FIG. 3A illustrates a screen 10 of the electronic book apparatus 100 on which content is displayed. The screen 101 of the electronic book apparatus 100 includes a clipping command icon 110 and a book report writing command icon 120.

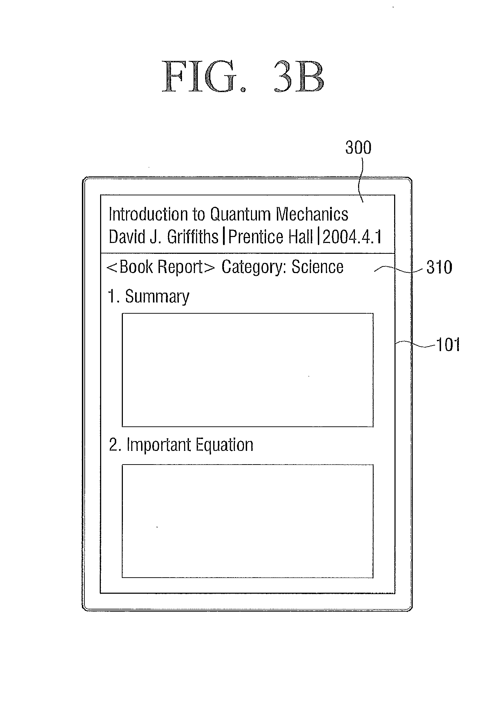

If a user touches the book report writing command icon 120 as shown in FIG. 3A, the electronic book apparatus 100 receives a command to write a book report. Then, the electronic book apparatus 100 displays a book report writing screen as shown in FIG. 3B.

FIG. 3B is a view illustrating an example of the book report writing screen if the category of the content is 'science'. As shown in FIG. 3B, the book report writing screen includes a content-related information display area 300 and a book report writing area 310.

The content-related information display area 300 displays the title, author, publishing company, and publishing date of the content as shown in FIG. 3B. For example, in FIG. 3B, a book titled "Introduction to Quantum Mechanics", written by "David J. Griffiths", and published by "Prentice Hall" on "April 1, 2004" is displayed.

Also, the book report writing area 310 displays the category of the content and a suitable book report writing form for this category as shown in FIG. 3B. In FIG. 3B, the category of the current content is "science" and a book report writing form suitable for the category "science" is displayed.

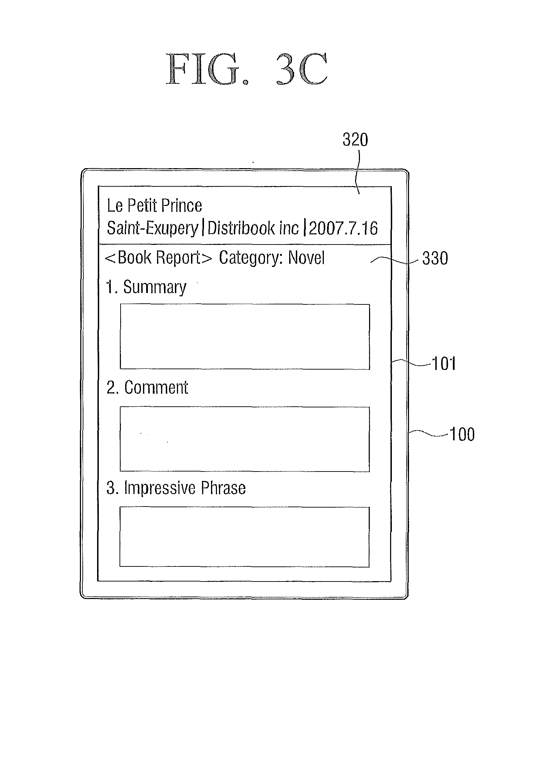

Another example of the book report writing screen is illustrated in FIG. 3C. FIG. 3C is a view illustrating a book report writing screen if the category of the content is 'novel'. As shown in FIG. 3C, the book report writing screen includes a content-related information display area 320 and a book report writing area 330.

As shown in FIG. 3C, the content-related information display area 320 displays the title, author, publishing company, and publishing date of the content. For example, the content-related information display area 320 displays a book titled "Le Petit Prince", written by "Saint-Exupery", and published by "Distribook Inc." on "July 16, 2007".

As shown in FIG. 3C, the book report writing area 330 displays the category of the content and a book report writing form suitable for this category. For example, in FIG. 3C, the category of the current content is 'novel' and a book report writing form suitable for the category 'novel' is displayed.

There are various categories and the electronic book apparatus 100 stores various book report writing forms corresponding to the respective categories.

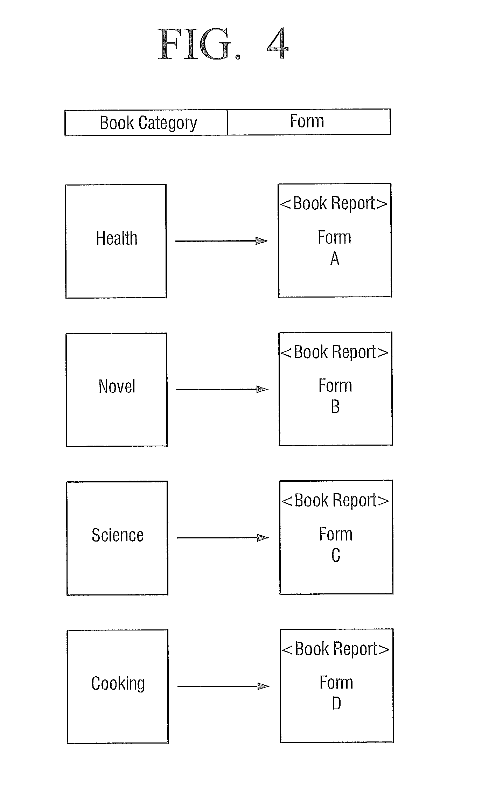

FIG. 4 is a view illustrating forms of book reports for respective categories of contents according to an exemplary embodiment. As shown in FIG. 4, the electronic book apparatus 100 stores a form 'A' corresponding to a category 'health', a form 'B' corresponding to a category 'novel', a form 'C' corresponding to a category 'science', and a form 'D' corresponding to a category 'cooking'.

As described above, the electronic book apparatus 100 displays the book report writing screen which enables a user to write a book report relating to the currently displayed content. Since the content-related information is also displayed on the book report writing screen, the user can easily know what content corresponds to the book report he/she is writing. Also, since a book report writing form suitable for each category is selected, the user can write a book report using a form suitable for the category of the content.

In this exemplary embodiment, the electronic book apparatus 100 displays the book report writing screen. However, this is merely an example. The exemplary embodiments can be applied to a situation where text is written relating to the content. In this case, if a specific command is input while the content is being displayed, the electronic book apparatus 100 displays a text writing screen to write text relating to the content.

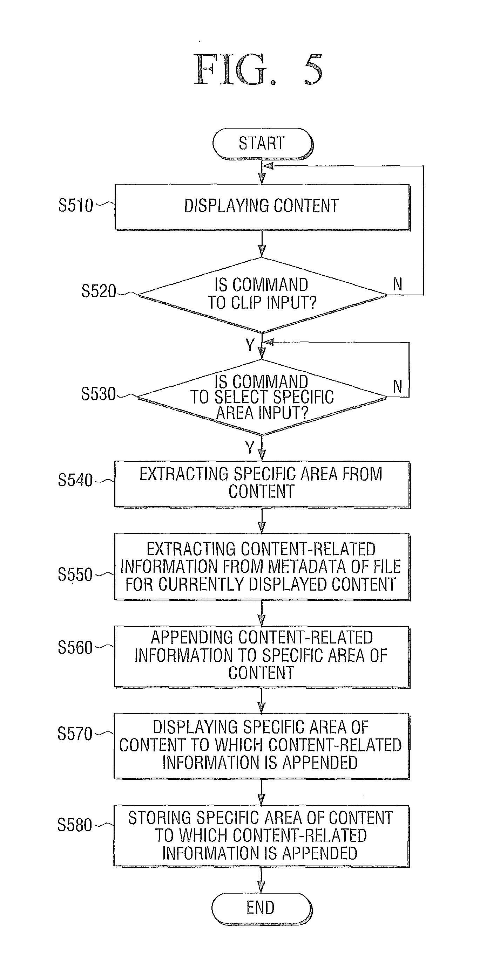

Hereinafter, a method for providing a clipping function will be described in detail with reference to FIGS. 5 to 6C. FIG. 5 is a flowchart illustrating a method for providing a clipping function according to an exemplary embodiment.

The electronic book apparatus 100 displays content on the screen (S510). Herein, the content is electronic book content. However, this should not be considered as limiting and any content that can be displayed on the screen of the electronic book apparatus 100, such as a picture and a moving picture, can be applied.

The electronic book apparatus 100 determines whether a clipping command is input or not by a user's manipulation (S520), for example, by determining whether the clipping command icon 110 is touched or not.

If a clipping command is input (S520-Y), the electronic book apparatus 100 determines whether a command to select a specific area from the currently displayed content is input or not (S530). The specific area recited herein refers to an area that is selected from the currently displayed content by a user and also an area that the user wishes to clip.

The specific area is selected by inputting a command to select a specific area. The command to select a specific area may be input by dragging on a touch screen or dragging using a mouse. For example, dragging on a touch screen may include sliding a user's finger across the touchscreen, and dragging using a mouse may include holding down a button on the mouse while simultaneously moving the mouse. Also, the electronic book apparatus 100 may receive a command to select a specific area from a user using a number of different types of manipulation.

If a command to select a specific area from content is input while the content is being displayed (S530-Y), the electronic book apparatus 100 extracts the specific area from the content (S540).

Content-related information is extracted from metadata of a file for the currently displayed content (S550).

Next, the electronic book apparatus 100 appends the content-related information to the selected specific area of the content (S560). The electronic book apparatus 100 displays the specific area of the content to which the content-related information is appended (S570). Through the above-described process, the electronic book apparatus 100 clips a specific area which is selected by a user.

The electronic book apparatus 100 stores the selected specific area as a clipping file along with the content-related information (S580). Accordingly, the electronic book apparatus 100 displays the content-related information when loading the stored clipping file again and displaying it.

Through the above-described process, the electronic book apparatus 100 displays the specific area which is clipped from the currently displayed content. Since the content-related information is also displayed on a clipping display screen, the user can easily know what content corresponds to the clipped specific area.

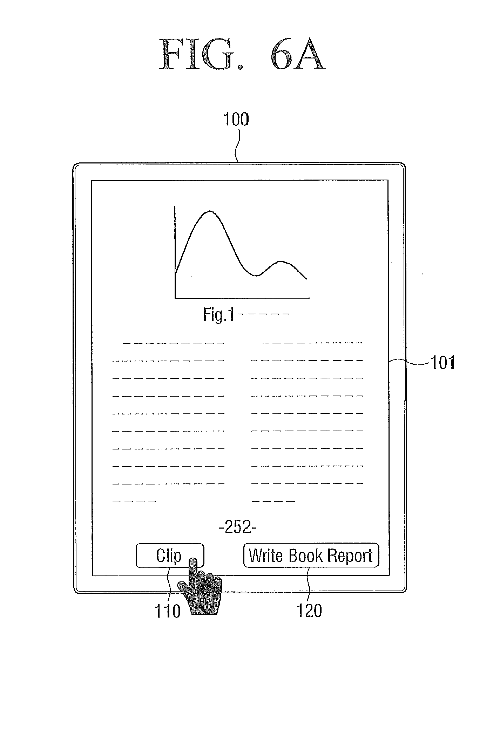

FIGS. 6A to 6C are views illustrating a process of executing a clipping function according to an exemplary embodiment.

FIG. 6A is a view illustrating a screen 101 of the electronic book apparatus 100 on which content is displayed. Also, the screen 101 of the electronic book apparatus 100 includes a clipping command icon 110 and a book report writing command icon 120.

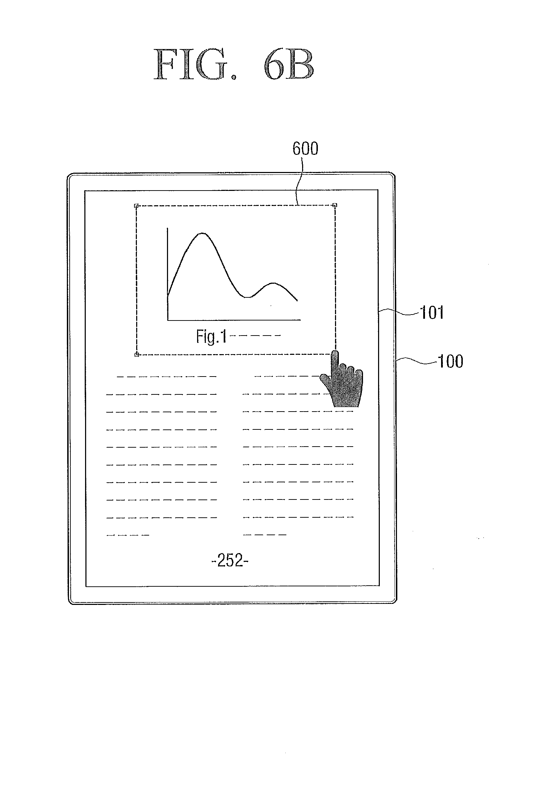

As shown in FIG. 6A, if a user touches the clipping command icon 110, the electronic book apparatus 100 receives a command to clip. Then, the electronic book apparatus 100 receives a command to select a specific area 600 from a user as shown in FIG. 6B.

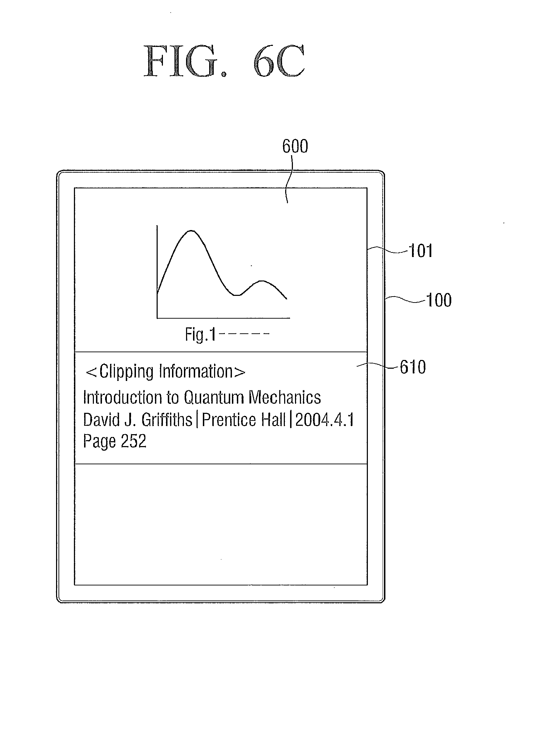

FIG. 6B illustrates that the user inputs a command to select the specific area 600 from the currently displayed content by dragging along a touch screen of the electronic book apparatus 100. If the user inputs a command to select a specific area as described above, the electronic book apparatus 100 display a clipping display screen to display the selected specific area 600 as shown in FIG. 6C.

FIG. 6C illustrates a clipping display screen on which a specific area clipped from content is displayed. As shown in FIG. 6C, the clipping display screen includes a clipping display area 600 and a clipping information display area 610.

The clipping display area 600 displays the specific area clipped from the content. As shown in FIG. 6C, the clipping display area 600 displays 'Fig. 1' which is clipped by the user.

Also, the clipping information display area 610 displays information relating to the clipped content, for example, a title, an author, a publishing company, a publishing date, and a page number of the content. In the exemplary embodiment of FIG. 6C, the clipping information display area 610 displays information of a book titled "Introduction to Quantum Mechanics", written by "David J. Griffiths", and published by "Prentice Hall" on "April 1, 2004", and displays "Page 252" indicating the number of page of the clipped specific area.

As described above, the electronic book apparatus 100 display a specific area which is clipped from currently displayed content. Since the content-related information is also displayed on the clipping display screen, the user can easily know what content corresponds to the clipped specific area.

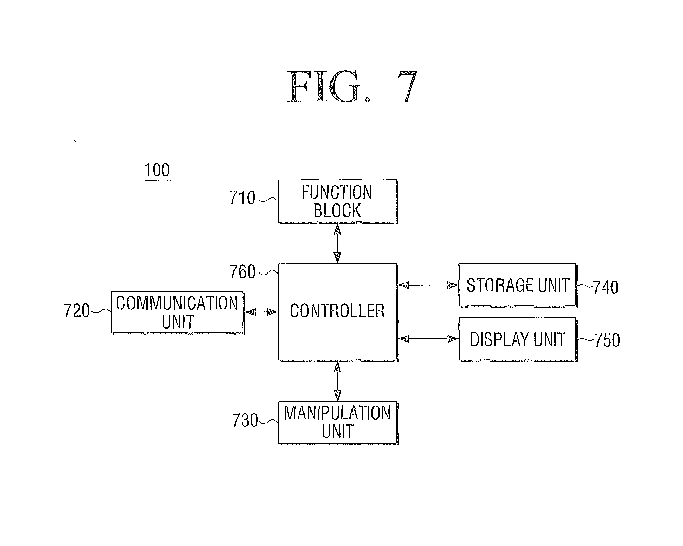

Hereinafter, the electronic book apparatus 100 will be described in detail with reference to FIG. 7. FIG. 7 is a block diagram illustrating an electronic book apparatus according to an exemplary embodiment. As shown in FIG. 7, the electronic book apparatus 100 includes a function block 710, a communication unit 720, a manipulation unit 730, a storage unit 740, a display unit 750, and a controller 760.

The function block 710 performs a function particular to the electronic book apparatus 100. For example, the function block 710 performs replaying content, in particular, electronic book content.

The communication unit 720 is communicably connected to an external device through a mobile communication network or Internet. The communication unit 720 can download electronic book content from an external device.

The manipulation unit 730 receives manipulation from a user to receive a user command. For example, the manipulation unit 730 receives manipulation corresponding to a command to clip, a command to select a specific area, and a command to write a book report from a user. The manipulation unit 730 may be realized as a touch screen, a button, a mouse, or a touch pad.

The storage unit 740 stores a program and an application which are necessary for performing the function of the electronic book apparatus 100. Also, the storage unit 740 stores contents including electronic book content and also stores a clipping file and a book report file created by the user. The clipping file and the book report file may be recorded along with the content-related information relating to corresponding content.

The display unit 750 displays a number of different screens to provide the function of the electronic book apparatus 100. For example, the display unit 750 displays electronic book content on a screen. The display unit 750 may display the clipping display screen to display a specific area clipped by a user. Also, the display unit 750 may display the book report writing screen to allow a user to write a book report. The display unit 750 also displays content-related information relating to the corresponding content on the clipping display screen and the book report writing screen.

The controller 760 controls the overall function of the electronic book apparatus 100 according to user's manipulation input through the manipulation unit 730.

The controller 760 determines whether a command to write a book report is input or not by user's manipulation, for example, by determining whether the book report writing command icon 120 is touched or not.

Also, if a command to write a book report is input, the controller 760 extracts content-related information from metadata of a file for the currently displayed content.

The controller 760 extracts category information from the metadata. The controller 760 selects a book report writing form corresponding to the category information. The book report writing forms for respective categories may be pre-stored in the storage unit 740 or may be created by the user.

The controller 760 appends the content-related information to the book report writing screen of the selected form. Also, the controller 760 controls the display unit 750 to display the book report writing screen to which the content-related information is appended. The controller 760 controls the book report writing screen to displayed the selected book report writing form.

Also, if a command to finish writing a book report is input through the manipulation unit 730, the controller 760 controls the storage unit 740 to store the written book report along with the content-related information. Accordingly, the content-related information is displayed when the stored book report is loaded again and displayed on the screen.

As described above, the controller 760 controls the display unit 750 to display the book report writing screen in order to allow the user to write a book report relating to the currently displayed content. Since the content-related information is also displayed on the book report writing screen, the user can easily know what content corresponds to the book report he/she is writing. Also, since a book report writing form suitable for each category is selected, the user can write a book report using a form suitable for the category of the content.

Also, the controller 760 determines whether a command to clip is input or not by user's manipulation, for example, by determining whether the clipping command icon 110 is touched or not.

If a command to clip is input, the controller 760 determines whether a command to select a specific area from currently displayed content is input or not. The specific area refers to an area that is selected from the currently display content by a user and also refers an area of the content that the user wishes to clip.

The specific area is selected by inputting a command to select a specific area. The command to select a specific area may be input by dragging on a touch screen or dragging using a mouse. Also, the controller 760 may receive a command to select a specific area from a user using a number of different types of manipulation.

If a command to select a specific area from content is input while the content is being displayed, the controller 760 extracts the selected specific area from the content. The controller 760 extracts content-related information from metadata of a file for the currently displayed content.

The controller 760 appends the content-related information to the selected specific area of the content. The controller 760 controls the display unit 750 to display the specific area of the content to which the content-related information is appended. Through the above-described exemplary process, the controller 760 clips the specific area selected by the user.

Also, the controller 760 controls the storage unit 740 to store the selected specific area as a clipping file along with the content-related information. Accordingly, the content-related information is displayed when the clipping file is loaded again and displayed on the screen.

As described above, the controller 760 controls the display unit 750 to display the specific area clipped from the currently displayed content. Since the content-related information is also displayed on the clipping display screen, the user can easily know what content corresponds to the clipped specific area.

In the above exemplary embodiment, the electronic book apparatus 100 was described. However, this is merely an example for convenience of explanation. The technical idea can be applied to any other electronic apparatus that can display contents on a screen and provide a function of writing text relating to the content or clipping it. For example, the electronic apparatus may be a portable multimedia player (PMP), an MP3 player, a mobile phone, a laptop computer, or a personal digital assistant (PDA).

According to various exemplary embodiments described above, if a specific command is input while the content is being displayed, a text writing screen including content-related information is displayed. Accordingly, since the content-related information is automatically displayed when the user writes text relating to the content, the user is not required to input the content-related information separately.

Also, if a command to select a specific area from content is input while the content is being displayed, the content-related information is appended to the selected specific area and displayed. Accordingly, since the content-related information is automatically displayed when the content is clipped, the user is not required to input the content-related information separately.

The foregoing exemplary embodiments and advantages are merely exemplary and are not to be construed as limiting. The inventive concept can be readily applied to other types of apparatuses. Also, the description of the exemplary embodiments is intended to be illustrative, and not to limit the scope of the claims, and many alternatives, modifications, and variations will be apparent to those skilled in the art.

## Claims

1. A method for providing a text writing function, the method comprising:
displaying content; and
if a command is input while the content is being displayed, displaying a text writing screen to write text,
wherein the text writing screen comprises information relating to the content.

2. The method as claimed in claim 1, further comprising:
extracting the information related to the content from a file associated with the content; and
appending the information related to the content to the text writing screen.

3. The method as claimed in claim 2, wherein the extracting extracts the information related to the content from metadata of the file associated with the content.

4. The method as claimed in any one of claims 1 to 3, wherein, if the content comprises book content, the information related to the content comprises at least one of a title, an author, a publishing company, and a publishing date of the book content.

5. The method as claimed in any one of claims 1 to 4, wherein the text writing screen comprises a screen to write a report relating to the content.

6. The method as claimed in any one of claims 1 to 5, further comprising:
extracting category information of the content; and
selecting a text writing form corresponding to the category information of the content,
wherein the displaying the text writing screen displays a text writing screen of the selected text writing form.

7. The method as claimed in any one of claims 1 to 6, further comprising:
if a command to select an area from the content is input while the content is being displayed, extracting the selected area from the content;
appending information relating to the content to the extracted area of the content; and
displaying the extracted area of the content and the information related to the content on a screen.

8. The method as claimed in claim 7, further comprising extracting the information related to the content from a file associated with the content,
wherein the appending appends the extracted information related to the content to the extracted area of the content.

9. The method as claimed in claim 8, wherein the extracting the information related to the content extracts the information related to the content from metadata of the file associated with the content.

10. An electronic apparatus comprising:
a display unit which displays content;
a manipulation unit which receives a command from a user; and
a controller which controls a text writing screen to be displayed if a command is input through the manipulation unit while the content is being displayed, the text writing screen for writing text relating to the content,
wherein the text writing screen comprises information relating to the content.

11. The electronic apparatus as claimed in claim 10, wherein the controller extracts the information related to the content from a file associated with the content and appends the information related to the content to the text writing screen.

12. The electronic apparatus as claimed in claim 11, wherein the controller extracts the information related to the content from metadata of the file associated with the content.

13. The electronic apparatus as claimed in any one of claims 10 to 12, wherein, if the content comprises book content, the content-related information comprises at least one of a title, an author, a publishing company, and a publishing date of the book content.

14. The electronic apparatus as claimed in any one of claims 10 to 13, wherein the text writing screen comprises a screen to write a report relating to the content.

15. The electronic apparatus as claimed in any one of claims 10 to 14, wherein the controller extracts category information of the content, selects a text writing form corresponding to the category information of the content, and displays the text writing screen based on the selected form.
